# EUROPÄISCHE PATENTSCHRIFT

(11) **EP 0 452 775 B1**
(45) Veröffentlichungstag und Bekanntmachung des Hinweises auf die Patenterteilung: **18.10.1995**
(21) Anmeldenummer: 91105573.9
(22) Anmeldetag: 09.04.1991
(51) Int. Cl.: C08G 18/65, C08G 18/75, C08G 18/10, C08G 18/32, C08G 18/12

(54) **Thermoplastische Polyurethan-Polyharnstoff-Elastomere mit erhöhtem Wärmestand**
Thermoplastic polyurethane-polyurea elastomers with increased heat resistance
Elastomères thermoplastiques de polyuréthane-polyurée ayant une résistance élevée à la chaleur

(30) Priorität: 20.04.1990 DE 4012629
(43) Veröffentlichungstag der Anmeldung: 23.10.1991
(73) Patentinhaber: BAYER AG, 51368 Leverkusen (DE)
(72) Erfinder: Hassel, Tillmann, Dr., W-5000 Köln 80 (DE); Müller, Hanns Peter, Dr., W-5060 Bergisch Gladbach 2 (DE)

(56) Entgegenhaltungen:
- EP-A- 0 073 389
- DE-A- 1 906 176
- FR-A- 1 548 298
- GB-A- 1 210 737

## Beschreibung

Die Erfindung betrifft neue aliphatische, lichtechte thermoplastische Polyurethan-Polyharnstoff-Elastomere mit erhöhter Wärmebeständigkeit und ein Verfahren zu ihrer Herstellung.

Thermoplastische Polyurethanelastomere (TPU) sind bekannt [D. Dieterich in: Methoden der Organischen Chemie (Houben Weyl) Band E 20, Seile 1638-41; Thieme, Stuttgart 1987]. Ein Nachteil der TPU ist ihre mäßige Wärme-Standfestigkeit, die besonders bei weichen Einstellungen nicht wesentlich über 100°C hinaus geht.

Aus Kunststoffe 68, (12), Seite 819-825 (1978) geht hervor, daß das Plateau der Schubmodulhurven diolverlängerter TPU nur bis 130°C reicht, daß Aminverlängerung zwar das Plateau zu höheren Temperaturen ausdehnt, daß solche Polyurethane aber nicht mehr ohne thermische Schädigung plastifizierbar sind. Daher wird eine Aminverlängerung von NCO-Prepolymeren in der Regel nur in der RIM-Technologie durchgeführt. Die so produzierten Formteile sind nicht thermoplastische Elastomere. Zur Erhöhung der Wärmestandiestigkeit von TPU hat man verschiedene Wege beschritten. Gemäß der DE-A-3 329 775 kann in aromatischem TPU beispielsweise durch anteiligen Ersatz des 4,4'-Diisocyanatodiphenylmethans durch 1,5-Diisocyanato-naphthalin die Wärmestandfestigkeit erhöht werden. Der gleiche Effekt wird durch anteilige Harnstoff-Verknüpfung mittels Wasser oder Diamin-Zusatz erreicht gemäß DE-A-2 423 764 und EP-A-0 021 323. Derartige Maßnahmen erhöhen jedoch in der Regel auch die Härte des entsprechenden thermoplastischen Polyurethans, was unerwünscht ist.

Aus US-A-2 929 802 ist bekannt, daß durch Kondensation von α,ω-Chloroformaten langkettiger Polyether bzw. -Polyesterdiole im Gemisch mit Piperazin thermoplastische Polyurethan-Elastomere erhalten werden. Derartige Elastomere weichen jedoch in ihrem Verhalten bei dynamischer Belastung unter Wärmeeinwirkung nicht von dem konventioneller TPU ab.

Aus US-A-3 635 908 ist bekannt, daß TDI-terminierte Prepolymere mit dem Bis-Carbonat des 2-Methyl-piperazins zu weichen thermoplastischen Polyurethan-Elastomeren kettenverlängert werden können. In der US-A-3 655 627 werden lichtechte TPU beschrieben, deren Hartsegment aus Bis-(4-isocyanato)-cyclohexyl-methan und Isophorondiamin aufgebaut ist. Diese Produkte sind bei geringem Hartsegmentanteil weich und haben Zugfestigkeiten bis 41 Nmm⁻² bei Bruchdehnungen zwischen 412 und 630 %. Das dynamische Verhalten der Produkte unter thermischer Belastung ist aber nicht befriedigend.

Es ist bekannt, daß die Aggregation der Hartsegmente eines Polyurethans nur dann optimal möglich ist, wenn die Aufbaukomponenten des Hartsegments chemisch und stereochemisch in sich möglichst identisch sind. Bei Nichterfüllung dieses Bauprinzips resultieren Produkte mit niedrigem Schmelzpunkt und schlechtem Wärmestand. Aus Rubber Chemistry and Technology, Vol. 58, S. 985-996 (1985) geht beispielsweise hervor, daß Butandiol-verlängerte TPU auf Basis 4,4'-Diisocyanato-dicyclohexylmethan nur dann einen befriedigenden Wärmestand erreichen, wenn der trans-trans-Anteil in der Isomerenmischung des Diisocyanats hoch ist. In Übereinstimmung mit diesem Befund werden in der GB-A-1 554 102 Polyurethane mit 4,4'-Diisocyanato-dicyclohexylmethan/Butandiol-Hartsegment beschrieben, deren Vorteil für die dort beschriebene Verwendung gerade in ihrem durch die Isomerenmischung des Isocyanats gestörtem Hartsegmentaufbau und damit niedrigem Produktschmelzpunkt liegt.

Es war daher nicht zu erwarten, daß ausgerechnet dann thermoplastische Polyurethan/Polyharnstoffelastomere mit bei geringem Hartsegmentanteil bemerkenswert hohem Wärmestand erhalten werden, wenn man 4,4'-Diisocyanato-dicyclohexylmethan als Isomerengemisch einsetzt, dieses Gemisch gegebenenfalls noch durch Zugabe von weiteren aliphatischen Diisocyanaten verdünnt und das Hartsegment durch Kettenverlängerung mit Piperazin aufbaut.

Die so erzeugten Hartsegmente sind Polyharnstoffe. Schmelzpunkte und Aggregation von Polyharnstoff-Hartsegmenten liegen generell höher als bei entsprechenden Polyurethanen. Dies gilt jedoch nur für Kettenverlängerung mit diprimären Diaminen, da nur dann die sehr starke interchenare Wechselwirkung über gegabelte Wasserstoffbrücken auftritt [Coll. γ Polym. Sci. 263 335-341 (1985)].

Piperazin ist jedoch ein di-sekundäres Diamin. Bei Verwendung dieser Verbindung entspricht die Anzahl der möglichen Wasserstoffbrücken im Hartsegment denen entsprechender Polyurethane. Es war daher in diesem Fall auch nicht zu erwarten, daß der erfindungsgemäß beobachtete höhere Wärmestand durch die Polyharnstoff-Struktur der Hartsegmente verursacht wird, weil nicht mehr Wasserstoffbrücken als im Polyurethan vorhanden sind.

Aufgabe der vorliegenden Erfindung war es, thermoplastische Polyurethane mit relativ geringer Härte, aber ausgezeichnetem Wärmestand zur Verfügung zu stellen.

Gegenstand der Erfindung sind thermoplastische Polyurethan-Polyharnstoffe aus jeweils wenigstens einem Makrodiol, einem aliphatischen Polyisocyanat und einem Diaminkettenverlängerer sowie gegebenenfalls niedermolekularen Diolen, Kettenreglern und üblichen Hilfs- und Zusatzstoffen, dadurch gekennzeichnet, daß sie aufgebaut sind auf Basis von
a) 4,4'-Diisocyanato-dicyclohexylmethan, das als Isomerengemisch mit einem Gehalt des trans-trans Isomeren von 10 bis 30 % vorliegt, gegebenenfalls im Gemisch mit weiteren aliphatischen Diisocyanaten,
b) einem cyclischen sekundären Diamin und
c) einem Makrodiol mit einem Molekulargewicht >400,
und wobei bei Verwendung von Isocyanatgemischen der Gehalt dieses Gemisches an 4,4'-Diisocyanato-dicyclohexylmethan 20 Mol-% nicht unterschreitet.

Das Diamin b) ist vorzugsweise ein Piperazin, welches mit Methyl substituiert sein kann.

In einer bevorzugten Ausführungsform enthält der Thermoplast partiell wiederkehrende Struktureinheiten der Formel I, 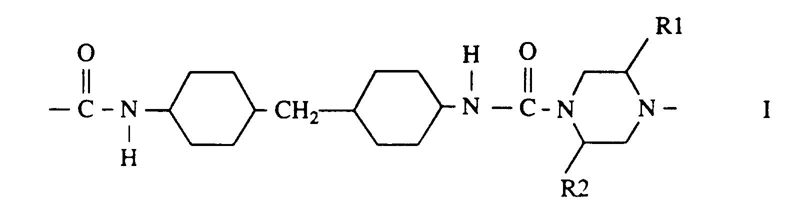
in der R₁ und R₂ gleich oder verschieden sein können und vorzugsweise H oder Methyl, besonders bevorzugt H, bedeuten.

4,4'-Diisocyanato-dicyclohexylmethan ist ein Isomerengemisch. Die Eigenschaften der Hartsegmente werden wesentlich durch den Anteil an trans-trans-Isomer im Diisocyanat bestimmt. Es wurde gefunden, daß bei sehr niedrigem Gehalt an trans-trans Isomer Polyurethane mit ungenügenden elastischen Eigenschaften und schlechtem Wärmestand resultieren. Bei hohem Gehalt an trans-trans-Isomer hingegen entstehen Produkte, die nicht mehr unzersetzt thermoplastisch verarbeitbar sind.

Deshalb werden erfindungsgemäß bevorzugt Polyurethane gemäß Anspruch 1, dadurch gekennzeichnet, daß das zum Aufbau der wiederkehrenden Struktureinheiten der Formel I eingesetzte 4,4'-Diisocyanato-dicyclohexylmethan ein Isomerengemisch mit einem Gehalt des trans-trans Isomeren von 10 % bis 30 %, bevorzugt von 20 % ist, beansprucht.

In einer bevorzugten Ausführungsform wird 4,4'-Diisocyanato-dicyclohexylmethan mit anderen Polyisocyanaten verschnitten. Dadurch werden wesentlich dünnflüssigere Prepolymere erhalten als mit der gleichen molaren Menge an 4,4'-Diisocyanato-dicyclohexylmethan allein. Es wurde gefunden, daß derartige Abmischungen ohne wesentliche Beeinträchtigungen der Produkteigenschaften möglich sind, wenn der Gehalt an 4,4'-Diisocyanato-dicyclohexylmethan 20 % nicht unterschreitet.

Gegenstand der Erfindung sind daher besonders Polyurethane, bei denen zum Aufbau der Hartsegmente Mischungen aus 4,4'-Diisocyanato-dicyclohexylmethan und anderen aliphatischen Diisocyanaten, bevorzugt Hexamethylendiisocyanat und Isophorondiisocyanat eingesetzt werden, mit der Maßgabe, daß diese Mischungen zwischen 20 und 90, bevorzugt 40 bis 80 %, besonders bevorzugt 60 bis 70 Mol-%, 4,4'-Diisocyanato-dicyclohexylmethan enthalten.

Die wiederkehrenden Einheiten der Formel I sind in einer bevorzugten Ausführungsform zu wenigstens 10 Gew.- % im erfindungsgemäßen Thermoplasten enthalten.

Die erfindungsgemäßen Polyurethane erreichen ihr Eigenschaftsbild durch ihren speziellen Hartsegmentaufbau. Diese Hartsegmente werden durch Kettenverlängerung mit cyclischen sekundären Diaminen, insbesondere mit Piperazin und seinen 2-Monoalkyl- bzw. 2,5-Dialkylderivaten erzeugt, wobei das unsubstituierte Piperazin besonders bevorzugt ist.

Geeignete zusätzliche Kettenverlängerer sind die in der PU-Chemie üblicherweise verwendeten kurzkettigen, in der Regel gegenüber Isocyanaten difunktionellen Alkohole. Beispiele für derartige Verbindungen sind Alkohole wie Ethylenglykol, 1,4-Butandiol, 1,6-Hexandiol, Neopentylglykol, Hydrochinon-bis-2-hydroxyethylether, 1,4-Cyclohexandiol, Diethylenglykol, 4,4'-Dihydroxydicyclohexylmethan.

Zum Aufbau der erfindungsgemäßen thermoplastischen Polyurethan-Polyharnstoff-Elastomere kommen als Weichsegmentpolyole die in der Polyurethanchemie üblichen und dem Fachmann an sich bekannten, vorzugsweise bifunktionellen, gegebenenfalls in untergeordneten Mengen, vorzugsweise bis 10 %, auch trifunktionellen Polyester, Polylactone, Polyether, Polythioether, Polyesteramide, Polycarbonate, Polyacetale, Vinylpolymere wie z.B. Polybutadiendiole oder auch bereits Urethan- oder Harnstoffgruppen enthaltende Polyhydroxylverbindungen, gegebenenfalls modifizierte natürliche Polyole, sowie auch andere Zerewitinoffaktive Gruppen, welche mit Isocyanaten zu reagieren vermögen, z.B. Amino-, Carboxyl- oder Thiolgruppen enthaltende Verbindungen in Betracht. Diese Verbindungen werden z.B. in DE-A 2 302 564, 2 423 764, 2 549 372, 2 402 804, 2 920 501 sowie 2 457 387 eingehend beschrieben.

Erfindungsgemäß bevorzugt sind im wesentlichen bifunktionelle Hydroxylgruppen-haltige Polyester aus Diolen und Adipinsäure, Hydroxylpolycarbonate, Hydroxylcaprolactone, Hydroxyl-polytetrahydrofurane oder Hydroxypolyether auf Polyethylenoxid und/oder Polypropylenoxidbasis und entsprechende Mischether aus derartigen Komponenten.

Die mittlere Molmasse dieser Polyole liegt zwischen 550 und 10.000, bevorzugt zwischen 1.000 und 4.000, besonders bevorzugt sind Polyole mit Molmassen zwischen 1.500 und 2.500.

Als Kettenregler können die in der Polyurethanchemie üblicherweise verwendeten und dem Fachmann bekannten monofunktionellen Alkohole, Amine und aliphatischen Isocyanate in Mengen von 0,05 bis 5 Mol-%, bezogen auf das Weichsegmentpolyol, eingesetzt werden. Als besonders günstig hat sich jedoch erwiesen, wenn man als Kettenregler monofunktionelle Ethylenoxid/Propylenoxid-Mischpolyether mit Molmassen um 2.000 einsetzt. Diese Kettenregler senken ebenfalls die Viskosität der Prepolymeren und wirken dadurch günstig auf ihre Verarbeitbarkeit ein. Gegenstand der Erfindung sind daher speziell Polyurethane gemaß Ansprüchen 1 bis 5, dadurch gekennzeichnet, daß als Kettenregler monofunktionelle Ethylenoxid/Propylenoxid-Polyether der Molmasse 400 bis 4.000, bevorzugt 1.000 bis 2.000 in Mengen von 0,05 bis 5 Mol-%, bezogen auf das eingesetzte Makrodiol bzw. Abmischung, verwendet werden.

Unter weiteren Hilfs- und Zusatzstoffen werden zum einen die dem Fachmann bekannten Katalysatoren der Polyurethanchemie wie beispielsweise Zinn-II-octoat, Dibutylzinndilaurat, Titantetrabutylat, Eisen-II-acetylacetonat, Diazabicyclooctan und N,N-Tetramethylethylendiamin verstanden. Andere Zusatzstoffe sind beispielsweise Füllstoffe und Verstärkungsstoffe wie Glasfasern, C-Fasern, TiO₂, Diatomeenerde, aromatische Polyamide, LC-Polyester auch in gemahlener Form, Quarzmehl und Polyharnstoffe sowie Farbstoffe wie anorganische oder organische Pigmente. Derartige Zusatzstoffe sind in der Kohlenwasserstoffphase unlöslich und werden vorteilhaft vor Ausführung der direkten Polyurethan-Pulversynthese in die eingesetzten Makropolyole eingearbeitet.

Zur Herstellung der erfindungsgemäßen Polyurethan-Polyharnstoffe gibt es mehrere Möglichkeiten. Man kann sie beispielsweise in an sich bekannter Weise in Lösung unter Verwendung von Polyurethanlösemitteln aufbauen, wobei sich besonders die in der DE-A-2 644 434 angegebenen Herstellverfahren in Lösung eignen und danach das Produkt in einer Ausdampfschnecke vom Lösemittel(gemisch) abtrennen. Der Polymeraufbau kann jedoch auch in heterogener Phase unter Verwendung von Emulgatoren für das NCO-Prepolymer erfolgen, wobei das Produkt pulverförmig anfällt. Derartige Verfahren sind für eine Kohlenwasserstoff-Trägerphase bekannt und beispielsweise in DE-A-2 556 945; 2 559 769, 2 442 085 sowie US-A-4 032 516 und 3 787 525 beschrieben. Besonders vorteilhaft setzt man für diese Synthese jedoch Emulgatoren ein, wie sie Gegenstand der DE-A-3 928 150 und 3 928 149 sind und arbeitet nach den dort beschriebenen Syntheseverfahren.

Hierbei handelte es sich um grenzflächenaktive Copolymere mit im wesentlichen linearer Struktur, erhältlich durch Copolymerisation von
A) einem partiellen Umsetzungsprodukt aus A1) (Meth)acrylsäure bzw. einem Derivat davon und A2) einer makromolekularen Verbindung, die mit wenigstens zwei funktionellen Gruppen, ausgewählt aus OH und NH₂ substituiert ist, wobei die nicht mit A1) umgesetzten funktionellen Gruppen irreversibel blockiert sind
mit
B) einem Urethan aus einem langkettigen Alkylisocyanat B1) und einem Hydroxyalkyl-(meth)acrylsäureester B2).

Mit diesen Grenzflächencopolymeren können Polyurethanpulver direkt in feinverteilter Form durch Umsetzung von Polyisocyanaten und isocyanatreaktiven Verbindungen in einer Trägerphase hergestellt werden.

Wegen der niedrigen Reaktivität der NCO-terminierten Prepolymeren gegenüber Wasser ist es möglich, die Kettenverlängerung in Wasser als kontinuierliche Phase vorzunehmen. Hierbei tritt keine oder nur im untergeordneten Maße Harnstoffkettenverlängerung durch Hydrolyse der NCO-Gruppen auf. Auch derartige Verfahren sind bekannt und beispielsweise in US-PS 3 655 627 sowie DE-OS 2 906 159 beschrieben. Auch bei diesen Verfahren ist in der Regel zur sicheren Durchführung der Zusatz grenzflächenaktiver Substanzen erforderlich.

Die erfindungsgemäßen Polyurethane können wie beschrieben sowohl in Kohlenwasserstoffen als auch in Wasser als kontinuierlicher Phase aufgebaut werden, wobei sie pulverförmig anfallen und beispielsweise durch Filtration isoliert werden. Besonders einfach ist jedoch diese Pulversynthese in Wasser als kontinuierlicher Phase, wenn man Polyurethan-Polyharnstoffe mit monofunktionellen Ethylenoxid/Propylenoxidpolyethern der Molmasse 400 bis 4.000, bevorzugt 1.000 bis 2.000, in Mengen von 0,05 bis 5 Mol-%, bezogen auf das eingesetzte Makrodiol bzw. Abmischung, herstellt. Bei der Herstellung dieser Polyurethane als Pulver in wäßriger Trägerphase kann auf jedweden Zusatz grenzflächenaktiver Stoffe verzichtet werden, so daß die sonst erforderlichen Schritte zur Abtrennung dieser Stoffe vom Produkt entfallen.

Gegenstand der Erfindung ist daher auch ein Verfahren zur Herstellung von Polyurethanen in Pulverform, dadurch gekennzeichnet, daß man den Kettenverlängerer in Wasser vorlegt, das Prepolymer in die wäßrige Trägerphase einrührt und die Kettenverlängerung bei gegebenenfalls erhöhter Temperatur zu Ende führt.

Die erfindungsgemäßen Polyurethane können nach konventionellen Methoden, beispielsweise Spritzguß oder Verpressen zu Formkörpern verarbeitet werden. Besonders günstig ist wegen ihrer Pulverform die Verwendung zur Herstellung von elastischen, weichen Häuten und Überzügen nach Sintertechnologien.

Bevorzugte Polyurethane sind dadurch gekennzeichnet, daß zu ihrer Herstellung pro Mol Makrodiol, gegebenenfalls in Abmischung mit niedermolekularen Diolen des MG-Bereichs 62-400, 1,7 bis 3, bevorzugt 1,8 bis 2,2 Mol, Diisocyanat(mischung) verwendet werden, beansprucht.

Die den Gegenstand der Erfindung bildenden Polyurethane sind weiche Produkte mit Shore A-Härten zwischen 60 und 80. Diese Härten werden - bei gutem elastischen Verhalten und hohem Wärmestand - bereits durch einen im Vergleich zu MDI/Butandiol-Typen erstaunlich niedrigem Hartsegmentgehalt erreicht.

Erfindungswesentlich ist der spezielle Hartsegmentaufbau der TPU, durch den weiche Produkte mit einem Wärmestand >130°C erhalten werden.

### Beispiele

### Beispiel 1

In einem 2 l Dreihalskolben mit Rührer und Rückflußkühler werden 90 g Hexandiol-polycarbonat (OHZ=56, F=2) vorgelegt und bei 120°C 2 Std. bei 14 mbar entwässert. Dann gibt man 20,04 g handelsübliches 4,4'-Diisocyanato-dicyclohexylmethan mit einem Anteil des trans-trans Isomeren von 20 % zu und rührt bei 110 bis 120°C. Nach 2 Std. ist ein NCO-Wert des Prepolymers von 2,36 % erreicht. Das Prepolymer wird mit 155 ml Toluol verdünnt. Zu dieser Lösung werden unter Rühren bei 60°C so viel einer Lösung von 2,7 g Piperazin in 230 ml Toluol/Isopropanol (1:1) schnell zugetropft. bis das Produkt NCO-frei ist (IR-Kontrolle). Es werden 1,5 ml der Kettenverlangererlösung nicht verbraucht. Aus Viskositätsgründen wird der Ansatz noch mit 535 ml des Toluol/Isopropanolgemischs verdünnt. Aus der Lösung werden Folien gegossen, die nach Abdampfen der Lösemittel zerkleinert, getrocknet und bei 180°C zu 1 mm dicken Prüfkörpern verpreßt werden (Preßdruck: 100 bar).

Das Produkt hat folgende Eigenschaften:

| | |
|---|---|
| Härte (Shore A): | 74 |
| Schmelzpunkt: | 240°C (Kofler, aus Folie, 5 min Liegezeit) |
| Spannung (100 %): | 4,43 [Nmm⁻²] |
| Spannung (300 %): | 10,52 [Nmm⁻²] |
| Bruchspannung: | 21,9 [Nmm⁻²] |
| Bruchdehnung: | 631 % |
| Erweichungspunkt unter statischer Belastung: | 198°C |
| (Penetrationsmethode: Stab mit 1 mm Durchmesser, Belastung 0,2N; Probendicke 1 mm). | |

### Beispiel 2

Nach der Verfahrensweise von Beispiel 1 wird ein Gemisch aus 45 g Hexandiol-polycarbonat (OHZ=56, F=2) und 45 g Hexandiol/Neopentylglykolpolyadipat (OHZ=56, F=2) entwässert und mit einem Gemisch aus 13,36 g 4,4'-Diisocyanato-dicyclohexylmethan und 5,66 g Isophorondiisocyanat auf einem NCO-Gehalt von 2,42 % prepolymerisiert. Das Prepolymer wird in 600 ml Toluol gelöst. Es wird wie in Beispiel 1 mit 2,7 g Piperazin in 225 ml Toluol/Isopropanol (2:1) kettenverlängert, wobei 10 ml der Lösung nicht verbraucht werden. Nach Verdünnen mit 400 ml Toluol/Isopropanol (2:1) wird analog Beispiel 1 zu Folien vergossen und zu Prüfkörpern verpreßt.

| Eigenschaften: | |
|---|---|
| Härte (Shore A): | 70 |
| Schmelzpunkt: | 230°C (Kofler) |
| Bruchspannung: | 34,7 [Nmm⁻²] |
| Bruchdehnung: | 1100 % |
| Erweichungspunkt unter statischer Belastung: | 138°C. |

### Beispiel 3

In einem 150 l Kessel mit Ankerrührer, Rückflußkühler und Tropftrichter werden 9 kg Ethylenglykol-polyadipat (OHZ=56, F=2) 2 Std. bei 120°C und 14 mbar entwässert. Man läßt ein Gemisch aus 1,572 kg 4,4'-Diisocyanato-dicyclohexylmethan (trans-trans Anteil: 20 %) und 666 g Isophorondiisocyanat zulaufen und prepolymerisiert bei 110°C. Nach 30 min ist der NCO-Gehalt auf 3.36 % abgefallen. Das Prepolymer wird in 15,5 l Toluol gelöst und bei 60°C mit einer Lösung von 387 g Piperazin in 23 l Toluol/Isopropanol (1:1) kettenverlängert. Die Lösung wird aus Viskositätsgründen noch mit 53,5 l des Lösemittelgemischs verdünnt Das Produkt wird über eine Ausdampfschnecke vom Lösemittel befreit, granuliert, getrocknet und zu Prüfkörpern verspritzt.

| Eigenschaften: | |
|---|---|
| Härte (Shore A): | 73 |
| Schmelzpunkt: | 230°C (Kofler) |
| Bruchspannung: | 21,7 [Nmm⁻²] |
| Bruchdehnung: | 1100 % |
| Erweichungspunkt unter statischer Belastung: | 159°C. |

### Beispiel 4

Ein Gemisch aus 75,735 g eines Hexandiol/Neopentylglykol-polyadipats (OHZ=66, F=2) und 1,0125 g eines butanolgestarteten Ethylenoxid/Propylenoxid-Mischpolyethers der mittleren Molmasse 2250 wird entwässert und mit einem Gemisch aus 6,5934 g Isophoron-diisocyanat und 18,1566 g 4,4'-Diisocyanato-dicyclohexylmethan bis zu einem NCO-Gehalt von 4,27 % bei 110°C prepolymerisiert. Das heiße (100°C) Prepolymer wird innerhalb 15 min zu einer schnell gerührten Lösung von 4,3856 g Piperazin in 439,5 g Wasser zugetropft. Zur vollständigen Reaktion wird die Suspension des entstandenen Pulvers noch 12 Std. bei 80°C nachgerührt. Das Pulver wird abgenutscht und getrocknet.
Ausbeute: quantitativ, Schmelzpunkt 230°C (Kofler)
Aus dem Pulver werden durch Verpressen bei 180°C (200 bar) Prüfkörper von 1 mm Dicke erzeugt.

| Eigenschaften: | |
|---|---|
| Härte (Shore A): | 74 |
| Spannung (300 %): | 7 [Nmm⁻²] |
| Spannung (600 %): | 21 [Nmm⁻²] |
| Bruchspannung: | 25 [Nmm⁻²] |
| Bruchdehnung: | 600 % |
| Plateau des Speichermoduls G bis 140°C (aus Torsionsmessung). | |

### Beispiel 5

Wie in Beispiel 4 werden 89,1 g eines Ethylenglykol-polyadipats (OHZ=56, F=2) und 1,0125 g des dort verwendeten butanolgestarteten Ethylenoxid/Propylenoxid-Mischpolyethers entwässert und mit einem Gemisch aus 6,5934 g Isophoron-diisocyanat und 18,1566 g 4,4'-Düsocyanato-dicyclohexylmethan auf einen NCO-Gehalt von 3,95 % prepolymerisiert. Das heiße Prepolymer wird innerhalb 15 min zu einer schnell gerührten Lösung von 4,3856 g Piperazin in 439,5 g Wasser getropft Danach wird wie in Beispiel 4 nachgerührt, das Pulver wird abgetrennt, getrocknet und zu Prüfkörpern verarbeitet.
Ausbeute: quantitativ

| Eigenschaften: | |
|---|---|
| Härte (Shore A): | 73 |
| Schmelzpunkt: | 220°C (Kofler) |
| Spannung (300 %): | 7,5 [Nmm⁻²] |
| Spannung (600 %): | 24 [Nmm⁻²] |
| Bruchspannung: | 33 [Nmm⁻²] |
| Bruchdehnung: | 760 % |
| Speichermodul G: Plateau bis 150°C (aus Torsionsmessung). | |

## Patentansprüche

1. Thermoplastische Polyurethan-Polyharnstoffe aus jeweils wenigstens einem Makrodiol, einem aliphatischen Polyisocyanat und einem Diaminkettenverlängerer sowie gegebenenfalls niedermolekularen Diolen, Kettenreglern und üblichen Hilfs- und Zusatzstoffen, dadurch gekennzeichnet, daß sie aufgebaut sind auf Basis von
a) 4,4'-Diisocyanato-dicyclohexylmethan, das als Isomerengemisch mit einem Gehalt des trans-trans Isomeren von 10 bis 30 % vorliegt, gegebenenfalls im Gemisch mit weiteren aliphatischen Diisocyanaten,
b) einem cyclischen sekundären Diamin und
c) einem Makrodiol mit einem Molekulargewicht >400,
und wobei bei Verwendung von Isocyanatgemischen der Gehalt dieses Gemisches an 4,4'-Diisocyanato-dicyclohexylmethan 20 Mol-% nicht unterschreitet.

2. Thermoplastische Polyurethan-Polyharnstoffe nach Anspruch 1, dadurch gekennzeichnet, daß partiell wiederkehrende Struktureinheiten folgender Formel I, 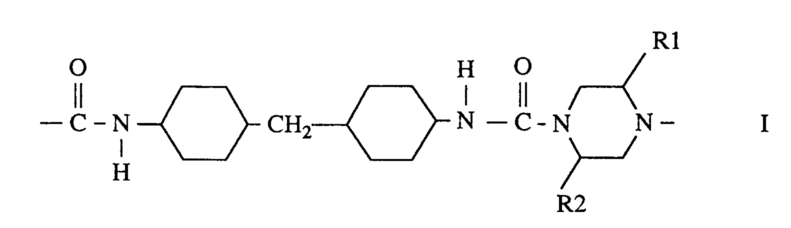 in der R₁ und R₂ gleich oder verschieden sein können und H oder Methyl bedeuten,
zu wenigstens 10 Gew.-% enthalten sind.

3. Polyurethan-Polyharnstoffe nach wenigstens einem der vorhergehenden Ansprüche, dadurch gekennzeichnet, daß zum Aufbau der Hartsegmente Mischungen aus 4,4'-Diisocyanato-dicyclohexylmethan und Hexamethylendiisocyanat und/oder Isophoron-diisocyanat eingesetzt werden, mit der Maßgabe, daß diese Mischungen zwischen 20 und 90 Mol-% 4,4'-Diisocyanato-dicyclohexylmethan enthalten.

4. Polyurethan-Polyharnstoffe nach wenigstens einem der vorhergehenden Ansprüche, dadurch gekennzeichnet, daß zu ihrer Herstellung pro Mol Makrodiol, gegebenenfalls in Abmischung mit niedermolekularen Diolen des MG Bereichs 62-400, 1,7 bis 3 Mol Diisocyanato(mischung), verwendet werden.

5. Polyurethan-Polyharnstoffe nach wenigstens einem der vorhergehenden Ansprüche, dadurch gekennzeichnet, daß als Kettenregler monofunktionelle Ethylenoxid/Propylenoxid-Polyether der Molmasse 400 bis 4.000, in Mengen von 0,05 bis 5 Mol-%, bezogen auf das eingesetzte Makrodiol bzw. Abmischung, verwendet werden.

6. Verfahren zur Herstellung von thermoplastischen Polyurethan-Polyharnstoffen nach wenigstens einem der vorhergehenden Ansprüche in Pulverform, dadurch gekennzeichnet, daß man den Kettenverlängerer in Wasser vorlegt, das Prepolymer in die wäßrige Trägerphase einrührt und die Kettenverlängerung bei gegebenenfalls erhöhter Temperatur zu Ende führt.

## Claims

1. Thermoplastic polyurethane polyureas of at least one macrodiol, an aliphatic polyisocyanate and a diamine chain-extending agent and, optionally, low molecular weight diols, chain regulators and typical auxiliaries and additives, characterized in that they are synthesized on the basis of
a) 4,4'-diisocyanatodicyclohexyl methane in the form of an isomer mixture containing 10 to 30% of the trans-trans isomer, optionally in admixture with other aliphatic diisocyanates,
b) a cyclic secondary diamine and
c) a macrodiol having a molecular weight of >400;
where isocyanate mixtures are used, the 4,4'-diisocyanatodicyclohexyl methane content of the mixture does not fall below 20 mole-%.

2. Thermoplastic polyurethane polyureas as claimed in claim 1, characterized in that they contain at least 10% by weight of partly recurring structural units corresponding to formula I: 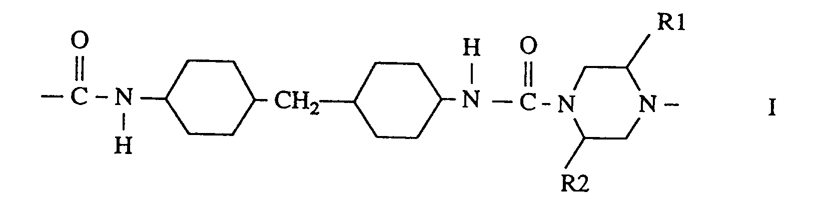 in which R₁ and R₂ may be the same or different and represent H or methyl.

3. Polyurethane polyureas as claimed in at least one of the preceding claims, characterized in that mixtures of 4,4'-diisocyanatodicyclohexyl methane and hexamethylene diisocyanate and/or isophorone diisocyanate are used for the synthesis of the hard segments, with the proviso that these mixtures contain between 20 and 90 mole-% of 4,4'-diisocyanatodicyclohexyl methane.

4. Polyurethane polyureas as claimed in at least one of the preceding claims, characterized in that 1.7 to 3 moles of the diisocyanate (mixture) per mole of macrodiol, optionally in admixture with low molecular weight diols having a molecular weight in the range from 62 to 400, are used for their production.

5. Polyurethane polyureas as claimed in at least one of the preceding claims, characterized in that monofunctional ethylene oxide/propylene oxide polyethers having a molecular weight of 400 to 4,000 are used as chain regulators in quantities of 0.05 to 5 mole-%, based on the macrodiol or mixture used.

6. A process for the production of the thermoplastic polyurethane polyureas claimed in at least one of the preceding claims in powder form, characterized in that the chain-extending agent is initially introduced in water, the prepolymer is stirred into the aqueous carrier phase and the chain-extending reaction is completed at optionally elevated temperature.

## Revendications

1. Polyuréthanes-polyurées thermoplastiques d'au moins un macrodiol, au moins un polyisocyanate aliphatique et au moins un agent d'allongement des chaînes du type diamine et le cas échéant de diols à bas poids moléculaire, de régulateurs de chaînes et de produits auxiliaires et additifs usuels, caractérisées en ce qu'elles sont constituées à base de :
a) le 4,4'-diisocyanatodicyclohexylméthane, à l'état de mélange d'isomères à une teneur de 10 à 30 % en l'isomère trans-trans, éventuellement en mélange avec d'autres diisocyanates aliphatiques,
b) une diamine secondaire cyclique et
c) un macrodiol de poids moléculaire supérieur à 400,
sous réserve que lorsqu'on utilise un mélange d'isocyanates, la teneur de ce mélange en le 4,4'-diisocyanatodicyclohexylméthane n'est pas inférieure à 20 mol %.

2. Polyuréthanes-polyurées thermoplastiques selon la revendication 1, caractérisées en ce qu'elles contiennent en proportion d'au moins 10 % en poids des motifs de structure partiellement répétés de formule I : 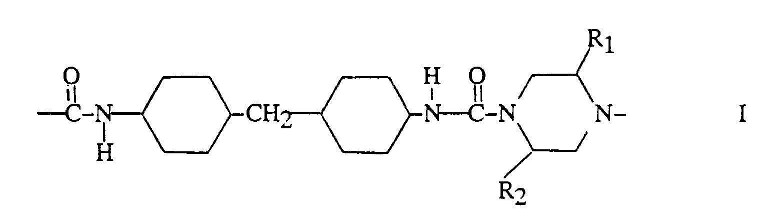 dans laquelle R₁ et R₂, ayant des significations identiques ou différentes, représentent chacun H ou un groupe méthyle.

3. Polyuréthanes-polyurées selon au moins une des revendications qui précèdent, caractérisées en ce que, pour la synthèse des segments durs, on a utilisé des mélanges de 4,4'-diisocyanatodicyclohexylméthane et d'hexaméthylènediisocyanate et/ou d'isophoronediisocyanate, ces mélanges devant contenir de 20 à 90 mol % de 4,4'-diisocyanatodicyclohexylméthane.

4. Polyuréthanes-polyurées selon au moins une des revendications qui précèdent, caractérisées en ce que, pour leur préparation, on utilise de 1,7 à 3 mol de diisocyanate ou mélange de diisocyanates par mole du macrodiol, éventuellement en mélange avec des diols à bas poids moléculaire, de poids moléculaire 62 à 400.

5. Polyuréthanes-polyurées selon au moins une des revendications qui précèdent, caractérisées en ce que, pour leur préparation, on a utilisé en tant que régulateurs de chaînes des polyéthers oxyde d'éthylène/oxyde de propylène monofonctionnels de masse moléculaire 400 à 4 000, en quantité de 0,05 à 5 mol %, par rapport au macrodiol ou mélange de macrodiols mis en oeuvre.

6. Procédé de préparation des polyuréthanes-polyurées thermoplastiques selon au moins une des revendications qui précèdent, à l'état de poudre, caractérisé en ce que l'on introduit l'agent d'allongement des chaînes dans l'eau, on introduit ensuite sous agitation le prépolymère dans la phase véhicule aqueuse et on achève l'allongement des chaînes le cas échéant en chauffant à température plus élevée.
